# EUROPÄISCHE PATENTSCHRIFT

(11) **EP 0 797 330 B1**
(45) Veröffentlichungstag und Bekanntmachung des Hinweises auf die Patenterteilung: **05.12.2001**
(21) Anmeldenummer: 97104076.1
(22) Anmeldetag: 11.03.1997
(51) Int. Cl.: H04L 12/24

(54) **Computer-Netzwerk und Verfahren zu dessen Betreiben**
Computer network and management method of same
Réseau d'ordinateurs et méthode de gestion correspondante

(30) Priorität: 13.03.1996 DE 19609889
(43) Veröffentlichungstag der Anmeldung: 24.09.1997
(73) Patentinhaber: ICS Intelligent Communication Software GmbH, 81379 München (DE)
(72) Erfinder: Fuss, Albert, 81379 München (DE); Klöber, Thomas, 90617 Puschendorf (DE)
(74) Vertreter: Turi, Michael, Dipl.-Phys.

(56) Entgegenhaltungen:
- EP-A- 0 503 921
- EP-A- 0 614 151
- US-A- 5 261 044

## Beschreibung

Die Erfindung betrifft ein Computer-Netzwerk mit wenigstens einem Zentralrechner, der mit wenigstens zwei Datenverarbeitungs-Endgeräten über Netzwerk-Komponenten vernetzt ist und wenigstens einem Netzwerk-Management-System zum Analysieren von Netzwerkeigenschaften, insbesondere hinsichtlich Systemfehler oder -störungen, und zum visuellen Darstellen des momentanen Netzwerkzustandes an einem Endgerät. Ferner betrifft die Erfindung ein Verfahren zum Betreiben eines derartigen Computer-Netzwerkes.

Aus der US-A 5,261,044 ist ein Computer-Netzwerk der eingangs genannten Art bekannt. Das bekannte Client-Server-Netzwerk verfügt über ein Netzwerk-Management-System, welches dem Netzwerkbenutzer ermöglicht, alle Komponenten des Netzwerkes auf einem Bildschirm als Nachbildung (sog. Icon) der entsprechenden Komponente darzustellen. Die Ansichten können dabei Netzwerkkomponenten an unterschiedlichen Orten oder in unterschiedlichen Abteilungen eines Unternehmens betreffen. Das Netzwerk-Management-System des bekanntes Client-Server-Netzwerkes ist außerdem in der Lage, im Netzwerk auftretende Fehler festzustellen und zu lokalisieren. Hierbei wird eine Fehlerisolationstechnik verwendet, d.h. tritt in irgendeiner Komponente des Netzwerks ein Fehler auf, so wird untersucht, ob der Fehler in der Komponente selbst oder in den unmittelbar benachbarten Komponenten verursacht ist. Wenn ein Fehler im Netzwerk einmal lokalisiert ist, bricht das Netzwerk-Management-System mit jeder weiteren Analyse, z.B. hinsichtlich der Auswirkungen dieses Fehlers auf das Netzwerk insgesamt, ab.

Der weitere Stand der Technik aus EP-A 0 614 151 und EP-A 0 503 921 betrifft lediglich Teilaspekte der vorliegenden Erfindung. In der EP-A 0 614 151 sind verschiedene Verfahren zur visuellen Darstellung von Netzwerkkomponenten angesprochen. Die EP-A 0 503 921 befaßt sich mit einem speziellen Expertensystem zur Fehlerisolation in einem Netzwerk.

Die bekannten Netzwerke haben jedoch den Nachteil, daß nur sehr wenige Anwender die einzelnen Teile eines Netzwerkes kennen und daher technische Informationen, wie zum Beispiel das "der Router zwischen dem Ethernet-Teilnetz im Standort B der Firma und dem Backbone des Netzwerkes des Standortes B überlastet ist", nur wenig Aussagegehalt aufweisen. Selbst technisch versierte Mitarbeiter können aus diesen Informationen oft nur nach längerem Studium der Systembeschreibung entnehmen, welche Unternehmensteile von eingetretenen Störungen genau betroffen sind. Seitdem aber die früher gebräuchlichen Mainframe-EDV-Anlagen, also solche, die im wesentlichen auf einen, die gesamte Datenverarbeitungsanlage steuernden Zentralrechner aufbauen, durch heterogene Client-Server-Applikationen mehr und mehr abgelöst wurden, ist eine Steuerung des Netzwerkes durch den einen Zentralrechner nicht mehr möglich, da ein solcher gar nicht mehr existiert. Vielmehr weisen moderne Datenverarbeitungsanlagen ein Netz von eigenständigen Teilnetzwerken auf, die über Verbindungselemente, wie im einfachsten Fall über Brücken (Bridges) oder Router miteinander kommunizieren. Somit ist aber eine zentrale Steuerung von Systemausfällen oder -überlastungen nach dem Verfahren der Mainframe-Rechner unmöglich geworden.

Es können zwar die einzelnen Informationen über die Netzwerkeigenschaften auch über Client-Server-Netzwerke ausgetauscht werden, jedoch kann hieraus nicht auf den Einfluß dieser Störungen auf den betrieblichen Ablauf in einem größeren Unternehmen geschlossen werden. Dies ist aber gerade seit Einführung von Client-Server-Applikationen, die betriebliche Organisation in einzelne Modelle umsetzen, die dann im Netzwerk nachmodeliert werden, sehr wünschenswert, um möglichst schnell auf Systemstörungen oder - überlastungen reagieren zu können.

Aufgabe der Erfindung ist es daher, ein Computer-Netzwerk und ein Verfahren zu dessen Betreiben zu schaffen, das die Kontrollmöglichkeiten verbessert.

Die Erfindung löst diese Aufgabe durch die Gegenstände der Ansprüche 1 und 17. Weitere Ausführungen der Erfindung sind in den jeweils abhängigen Ansprüchen beschrieben.

Danach weist das Netzwerk-Management-System des erfindungsgemäßen Computer-Netzwerkes mindestens eine Steuereinheit auf zum Ermitteln der Auswirkungen lokaler Netzwerkeigenschaften auf Bereiche einer Unternehmenshierarchie, die von den Netzwerkeigenschaften unmittelbar oder mittelbar betroffen sind. Gemäß dem erfindungsgemäßen Verfahren werden die ermittelten lokalen Netzwerkeigenschaften hinsichtlich ihres unmittelbaren oder mittelbaren Einflusses auf Bereiche einer Unternehmenshierarchie bewertet und mit Rücksicht darauf visuell gekennzeichnet.

Vorzugsweise umfassen die ermittelten Netzwerkeigenschaften neben dem Zustand der Hardwarekomponenten des Netzwerkes, wie Systemfehler, momentane Auslastung und/oder die freien Systemresourcen, auch den Zustand der installierten Softwarekomponten, wie der momentane Bearbeitungszustand der auf dem Netzwerk laufenden Applikationen.

Die Erfindung dient dem effizienten Lösen von Netzwerkproblemen, insbesondere dem Ausfall von Hard- und Softwarekomponenten, z.B. Bridges, Sternkopplern, Servern, Applikationen, etc., indem sie eine Übersicht schafft, welche Bereiche eines Unternehmens von einem entsprechenden Ausfall betroffen sind (z.B. Vertrieb, Entwicklung, Produktion, etc.). Dabei sind die den jeweiligen Unternehmensbereichen zugehörigen Geschäftsprozesse zusammen mit der installierten Hard- und Software des Computer-Netzwerkes - nachfolgend als "IV (Informationsverarbeitungs) - Resourcen" bezeichnet - modelliert. Dadurch werden Geschäftsprozesse inklusive zugehöriger IV-Resourcen, insbesondere hinsichtlich der Auswirkungen etwaiger Störungen der IV-Resourcen, für das Unternehmen transparent gemacht. Das erfindungsgemäße Netzwerk-Management-System bewertet z.B. die Ausfälle von IV-Resourcen nach ihren Auswirkungen auf die Geschäftsprozesse und ordnet den Ausfällen Prioritäten zu. Ausfälle können dann anhand dieser Priorität ihrer Wichtigkeit nach beseitigt werden.

Der erfindungsgemäß angezeigte Netzwerkzustand einschließlich des Zustandes von z.B. von einer Systemstörung betroffener Unternehmensbereiche gibt somit eine globale Übersicht über den momentanen Zustand sämtlicher Hardware- und Softwarekomonenten im Netzwerk, die es ermöglicht, in optimaler Weise auf etwaige Störungen im Netzwerk zu reagieren. Es werden beispielsweise neben den Systemfehlern auch die Auslastung und die freien Systemresourcen jedes einzelnen Datenverarbeitungs-Endgerätes sowie der dort installierten Softwarekomponenten ermittelt. Dabei bestimmt die Steuereinheit in Abhängigkeit des ermittelten Netzwerkzustandes bezüglich eventueller Einschränkungen der Leistungsfähigkeit des Systems bzw. bezüglich Störungen oder Ausfällen einzelner Teile des Netzwerkes die hierdurch betroffenen Bereiche der Unternehmenshierarchie und die zugehörigen Geschäftsprozesse und Projekte, die in entsprechenden IV-Resourcen umgesetzt sind. Außerdem bestimmt die Steuereinheit bevorzugt die Abarbeitbarkeit künftiger und der zum Zeitpunkt des Eintritts der Störung noch in der Warteschleife befindlichen Applikationen.

Schließlich wird der Netzwerkzustand durch die Ausgabeeinheit in Form der von der Steuereinheit möglicherweise bestimmten Einschränkung der betrieblichen Ablauforganisation visuell dargestellt.

Hierdurch wird erreicht, daß bei Auftreten einer Systemstörung und bei Systemengpässen durch Überlastung einzelner Komponenten, deren Einfluß auf die in den IV-Resourcen umgesetzten Modelle der einzelnen Bereiche der betrieblichen Organisationsstruktur bzw. Unternehmenshierarchie ermittelt und nach deren Bedeutung gewichtet werden kann.

Mit dem Computer-Netzwerk und dem Verfahren zum Betreiben eines Computer-Netzwerkes gemäß der Erfindung ist es möglich, daß auch ohne spezielle Kenntnis des Netzwerkes jeder Mitarbeiter, insbesondere jeder Verantwortungsträger des Unternehmens, den momentanen Hard- und Softwarezustand des Netzwerkes schnell erfassen kann und darüberhinaus nun auch den Einfluß möglicher Störungen auf die betriebliche Ablauforganisation erkennen kann. Das heißt, daß wenigstens einem der Benutzer selbstätig Informationen über den Einfluß seiner Leistungsfähigkeit und eventueller Systemstörungen auf die betriebliche Ablauforganisation zur Verfügung stehen.

Nach der Umstrukturierung der meisten Datenverarbeitungsanlagen in den Unternehmen wird heute vorzugsweise ein System eingesetzt, das die einzelnen Teile der Unternehmensstruktur in Modelle für das EDV-System umsetzt und so eine IV-Resourcenumgebung aufweist, die im wesentlichen der betrieblichen Struktur entspricht. So bilden die einzelnen Mitarbeiter einer Abteilung zum Beispiel einen relativ abgeschlossenen Mitarbeiterkreis. Parallel hierzu sind in der Datenverarbeitungsanlage die einzelnen Computer oder anderen Endgeräte der Mitarbeiter zu einem Teilnetzwerk zusammengeschlossen, das über eine Kommunikationsstelle mit dem übrigen betrieblichen Netz von Datenverarbeitungsanlagen zusammengeschlossen ist. Über die Verbindungsstelle zur betrieblichen Außenwelt, die zum Beispiel aus einer "Bridge", einem "Router" oder einem "Repeater" bestehen kann, setzen sich andere Mitarbeiter mit den einzelnen Mitarbeitern der Abteilung in Verbindung oder greifen auf deren Datenbestände zurück, während die Abteilung wiederum mit den übrigen Netzwerkteilnehmern kommuniziert und auf zentral oder dezentral erfaßte Daten zugreift.

Durch das erfindungsgemäße Netzwerk ist es nun möglich, daß auch nicht netzwerkerfahrene Mitarbeiter über ihren Bildschirm oder externe Anzeigegeräte Informationen erlangen, welche Unternehmensteile von dieser computer-technischen Teamarbeit aufgrund von Störungen oder Leistungsengpässen ausgeschlossen sind. Fällt beispielsweise der Server der Buchhaltungsabteilung aus, kann ein Abteilungsleiter aus einer Verkaufsabteilung direkt auf seinem Bildschirm erkennen, daß zur Zeit eine Kommunikation mit der Buchhaltung nicht möglich ist, eine Verbuchung seiner Aufträge also nicht vorgenommen werden kann.

Gleichzeitig erkennt er jedoch, daß von dieser Störung die Einkaufsabteilung nicht betroffen ist und er die internen Aufträge zum Einkauf der verkauften Waren trotz der Systemstörung ordnungsgemäß übertragen kann. Insbesondere für die Mitarbeiter der Geschäftsführung ergibt sich ein besonderer Vorteil der Erfindung aus der unternehmensweiten Anzeige der nicht verfügbaren oder durch beeinträchtigten Geschäftsprozesse. So kann auf einen Blick und unabhängig von sachkundigen Mitarbeitern der Geschäftsführer eines Unternehmens überwachen, in wie weit die Datenverarbeitungsanlage gestört ist und in welchem Umfang Maßnahmen ergriffenwerden müssen.

Ferner erkennt er auch, wenn einzelne Teile des Netzwerkes häufig überlastet sind oder an ihre Systemgrenzen stoßen. So kann zum Beispiel ein ständig als überlastet markierter Server auf dem Bildschirm des Geschäftsführers zeigen, daß der Wunsch einer Abteilung nach einem leistungsfähigeren Gerät tatsächlich auf sachlichen Erwägungen beruht. Andererseits kann auch die Investition in eine teure zusätzliche Verbindung zum Produktionsstandort im Ausland gespart werden, wenn das System anzeigt, daß die Engpässe nicht an der Übermittlung liegen, sondern vielmehr nur an einem vor dem Router angeordneten, überlasteten Gateway-Server und den Auswirkungen der Überlastung auf das System.

Ein weiterer Vorteil der Erfindung liegt darin, daß bei Störungen des Netzwerkes entweder manuell durch den Systemadministrator oder selbstätig durch das Netzwerk-Management-System eine Umgebung der Störung ermöglicht werden kann oder ein Engpaß in einer Verbindungsleitung vermieden werden kann durch Änderung einzelner Systemadressen, so daß die an die zugehörigen Komponenten adressierten Daten über andere Netzwerk-Teile ihr vorgesehenes Ziel erreichen.

Bei einer bevorzugten Ausgestaltung der Erfindung werden die Einflüsse der Netzwerkeigenschaften auf die Ablauforganisation in Form eines kleinen Schaubildes auf dem Desktop des jeweiligen Benutzers angezeigt. Dabei zeigt das Schaubild jeweils die übergeordneten Geschäftsbereiche an und der Benutzer kann bei Meldung einer Störung in einem dieser Geschäftsbereiche durch eine Eingabe, insbesondere durch einen Mausklick auf diesen Geschäftsbereich eine Detailansicht dieses Geschäftsbereiches anfordern. Durch wiederholtes Anwenden dieser Technik kann der Benutzer dann immer tiefer in die Organisationsstruktur des Unternehmens eindringen, bis er, wenn er hierzu autorisiert sein soll, Informationen über jede einzelne Kostenstelle erlangen kann.

Zweckmäßigerweise erfolgt die Darstellung des Zustandes eines Geschäftsbereiches durch eine Einfärbung des jeweiligen Teilsymbols. So kann zum Beispiel das Netzwerk-Management-System die möglichen Störungen in vier hierarchische Stufen unterteilen, denen die Farben grün für keine Störung, gelb für leichte Störung, orange für schwere Störung und rot für Totalausfall zugewiesen sind.

Weitere Merkmale und Vorteile der Erfindung ergeben sich aus den Unteransprüchen und aus der folgenden Beschreibung der Zeichnungen.

Die Zeichnungen zeigen in
- Fig. 1: eine schematische Darstellung eines Computer-Netzwerkes; und
- Fig. 2: eine schematische Übersicht über die Einbindung von Geschäftsprojekten in die Unternehmensstruktur einerseits und die hierfür benötigten IV-Resourcen andererseits.

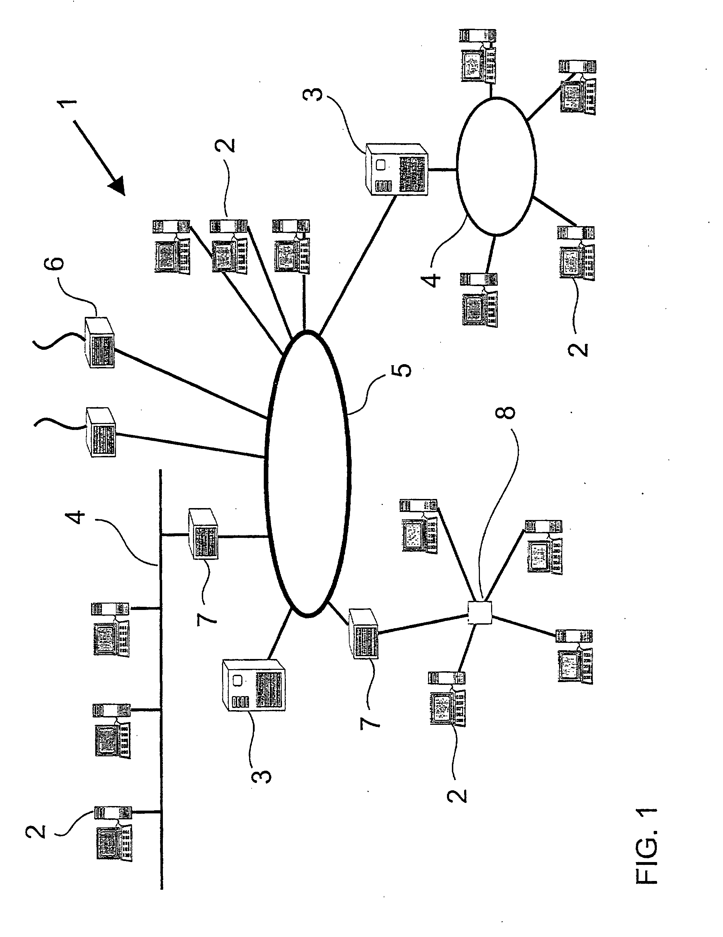

In Fig. 1 ist ein für die Erfindung geeignetes Computer-Netzwerk 1 - auch Client-Server-Netzwerk genannt - dargestellt. Das Netzwerk 1 verfügt über eine zentrale Netzverbindung bzw. Backbone 5, an dem verschiedene Teilnetzwerke, aber auch andere Netzwerkkomponenten 4 angeschlossen sind. Dies kann z.B. über einen Sternkoppler 8 zusammengeschlossenes Sternnetz oder ein Ring- bzw. ein Bus-Netz sein.

Über weitere Verbindungselemente, wie ein Router 6 oder Brücke 7, kann das Netz an angrenzende Netze angeschlossen sein. Dies können sowohl direkt angrenzende Computer-Netzwerke, aber auch evtl. über zusätzliche Kommunikationsserver angeschlossene Telefonnetze, über die Zugang zu anderen firmeneigenen oder fremden Netzwerken erlangt wird.

Wird das dargestellte Netzwerk nach einem bekannten Verfahren betrieben und tritt in einer der Netzwerkkomponenten 4 oder bei einem der Server 3 bzw. Clients 2 ein Fehler oder ein Engpass auf, so merken dies die Anwender oder die Anwendungssoftware erst dann, wenn der Versuch eines Zugriffs fehlschlägt. In diesem Fall reagiert der Anwender dann entsprechend und stellt weitere Versuche an, bis der Schaden durch einen hierfür verantwortlichen Mitarbeiter behoben ist. Bei sehr großen heterogenen Netzwerken ist dies jedoch uneffektiv, da zum einen der entsprechende Mitarbeiter bzw. dessen Software nicht nur den betroffenen Netzwerkteilnehmer meiden wird, sondern vielleicht unnötigerweise das gesamte Projekt zurückstellen wird. Dies liegt daran, daß der Teilnehmer nicht weiß, aus welchem Grund sein Abarbeitungsversuch gescheitert ist und der Systembetreuer andererseits ständig mit Fehlermeldungen überhäuft wird, ohne zu wissen, welche Auswirkungen die einzelnen Felder auf den betrieblichen Ablauf im einzelnen haben. So wird er die gemeldeten Fehler in der Regel nach der Reihenfolge des Eingangs bearbeiten und so im Extremfall zuerst das gebrochene BNC-Kabel am PC der Aushilfssekretärin erneuern und sich erst dann um den Festplattenabsturz kümmern, der die Kommunikation zwischen der Verwaltung und der Produktion blockiert hat.

Mit dem erfindungsgemäßen Netzwerk erhält der Systembetreuer, aber auch jeder einzelne Mitarbeiter ein Instrument, mit dem er auf seinem Bildschirm direkt die Auswirkungen eines etwaigen Fehlers der Hard- und Software-Netzwerkomponenten feststellen und entsprechende Maßnahmen ergreifen kann. Ein derart ausgebildetes Netzwerk trägt somit wesentlich zur effektiven Pflege der Datenverarbeitungsanlage bei.

Schließlich kann jeder Verantwortungsträger anhand der graphischen Darstellung der Abarbeitungsmöglichkeiten der einzelnen Projekte genau planen, welche der in der nächsten Zeit anstehenden Projekte voraussichtlich planmäßig abgearbeitet werden können und welche aufgrund von Systemeinschränkungen zurückgestellt werden müssen. Dies ermöglicht ihm unmittelbar die Systemeinschränkungen in die Projektplanung mit einzubeziehen und vermeidet Fehlplanungen über derzeit von Seiten der Hardware nicht mögliche Vorhaben.

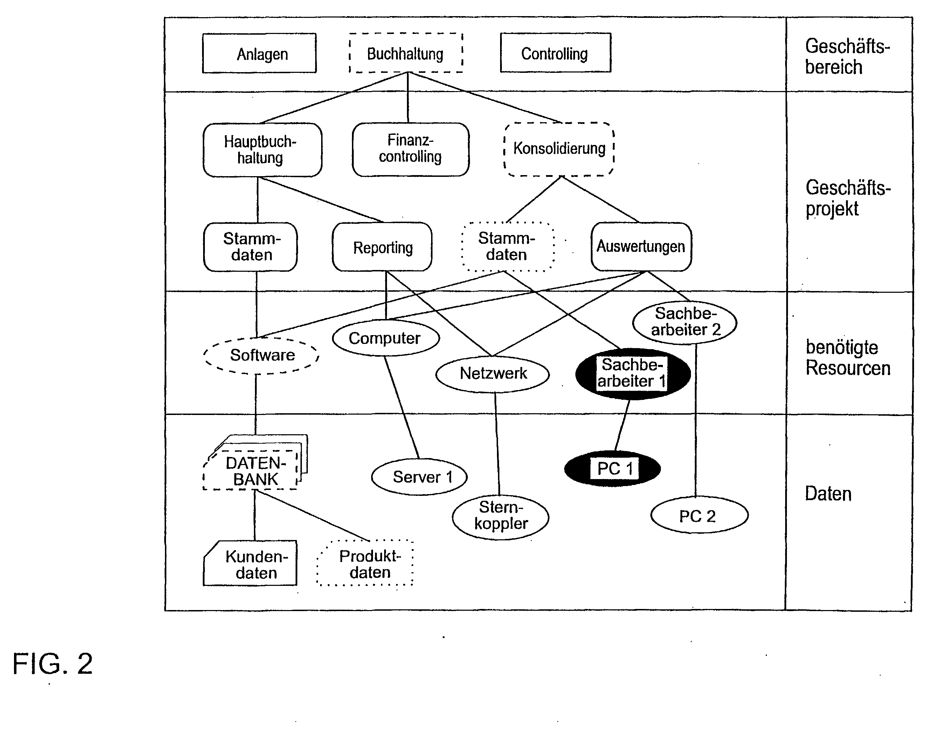

In Fig. 2 ist die Eingliederung eines in der Datenverarbeitungsanlage umgesetzten Modells eines Geschäftsprojektes in den jeweiligen Geschäftsbereich und die zur Abarbeitung des Projektes notwendigen IV-Resourcen und Daten darstellt.

So benötigt beispielsweise Sachbearbeiter 1 für die Abarbeitung eines Projektes in der Buchhaltung seinen Personalcomputer - nachfolgend PC 1 genannt - und die von der Datenbank zur Verfügung gestellten Stammdaten. Die Datenbank wiederum verwaltet die Kunden- und die Produktdaten.

Tritt nun bei den Produktdaten ein Plattenengpass auf, etwa weil zuviele Teilnehmer auf diese Daten zugreifen möchten, so sind die Daten für den PC des Sachbearbeiters nur schwer zugänglich, eine effektive Arbeit ist aufgrund der Verzögerung nicht mehr möglich. Das erfindungsgemäße Netzwerk-Management-System erkennt dieses und weist der Produktdatenbank einen entsprechenden Problemstatus zu, der auf dem Bildschirm entsprechend gekennzeichnet wird, zum Beispiel durch eine orange-Färbung des entsprechenden Teils der Darstellung des Netzwerkes 1. In Fig. 2 ist dieser Problemstatus durch ein gepunktetes Sinnbild dargestellt. Aufgrund der hierarchisch verwalteten Netzwerkstruktur hat diese Störung jedoch wiederum Einfluß auf die übergeordnete Datenbank, die ihrerseits nicht mehr in der Lage ist, die angeforderten Daten zu erlangen und weiterzugeben.

Da die Datenbank jedoch nur bezüglich der Produktdaten eingeschränkt arbeitet, die Kundendaten jedoch etwa an die Marketingabteilung uneingeschränkt weitergeben kann, weist das Netzwerk-Management-System ihr nur einen geringwertigen Problemstatus zu. Dies kann auf dem Bildschirm beispielsweise durch ein gelb-Färbung geschehen, in Fig. 2 ist dies durch ein gestricheltes Sinnbild dargestellt.

Ebenso wie auf die Datenbank hat der Engpaß bei den Produktdaten auch Einfluß auf die Softwarekomponenten, welche die Datenbankabfragen durchgeführt, so daß auch diese in entsprechender Weise erfaßt und mit einem geringwertigen Problemstatus versehen wird.

Auf seinem Bildschirm erhält nun jeder Benutzer ein z.B. gelb eingefärbtes Datenbanksymbol, das im signalisiert, daß er zum einen nicht mit einem reibungslosen Projektablauf rechnen kann, zum anderen jedoch die Datenbank nicht ausgefallen ist, so daß eine Projektdurchführung durchaus möglich ist und weitere Informationen über untergeordnete Netzwerkstrukturen angefordert werden müssen.

Sind dagegen alle für ein Projekt benötigten Netzwerkkomponenten fehlerfrei - auf dem Bildschirm z.B. durch grüne Symbole des Netzwerkes 1 dargestellt - kann der Sachbearbeiter oder ein Vorgesetzter davon ausgehen, daß zumindest bei Projektbeginn von Seiten der Hardware keine Hindernisse für eine Durchführung des Projektes vorliegen. Auch während des Projektablaufs ist eine Kontrolle möglich.

In einem zweiten Beispiel aus Fig. 2 ist der PC 1 des Sachbearbeiters 1 ausgefallen. Er bekommt vom Netzwerk-Management-System den höchstrangigen Problemstatus zugewiesen, nämlich Ausfall. Auf dem Bildschirm kann dies zum Beispiel durch eine rot-Färbung des entsprechenden Symbols geschehen, in Fig. 2 ist dies durch ein schwarz gefülltes Sinnbild gekennzeichnet. Da aus Sicht der Datenverarbeitung der Sachbearbeiter 1 nur dann Projektarbeit leisten kann, wenn er über einen funktionierenden PC verfügt, ist mit dem Ausfall des PC's auch der Sachbearbeiter nicht mehr in die Projektarbeit einbindbar, so daß auch er als ausgefallen markiert wird. Somit sind alle Projekte, für deren Durchführbarkeit der Sachbearbeiter 1 benötigt wird, für die Zeitdauer des Ausfalls des PC 1 nicht durchführbar. Diese Einschränkung der der Buchhaltung zugehörigen IV-Resourcen ist auf dem Bildschirm des Netzwerkes 1 dadurch zu erkennen, daß die Stammdatenbearbeitung den Problemstatus "starke Störung" aufweist, z.B. durch eine orange-Färbung. Ferner weist die Konsolidierung als übergeordnete Geschäftsfunktion der Buchhaltung sowie die Buchhaltung selbst einen geringen Problemstatus auf, etwa durch eine gelb-Färbung gekennzeichnet.

Bei einer bevorzugten Ausführungsform der Erfindung sehen Mitarbeiter, die nicht zur Buchhaltung gehören, beispielsweise auf ihrem Bildschirm nun nur das gelbe Symbol der Buchhaltung. Werden Projekte geplant, in die Buchhaltung einbezogen werden soll, so kann der entsprechende Benutzer des Netzwerkes, zum Beispiel durch einen Mausklick auf das Buchhaltungssymbol oder durch eine andere Eingabe, vorausgesetzt er wurde hierfür vom Systemadministrator autorisiert, weitere Informationen über die angezeigte geringwertige Störung anfordern In diesem Fall werden ihm dann die Geschäftsprojekte der Buchhaltung angezeigt und er kann sich mittels seiner Eingaben die Buchhaltung soweit anzeigen lassen, bis er sieht, daß die Funktionsstelle des Sachbearbeiters 1 ausgefallen ist. Plant er nun ein Projekt, in dessen Bearbeitung Sachbearbeiter 1 miteinbezogen werden. soll, kann er dieses zurückstellen und merkt nicht erst nach Beginn des Projektes, daß er es nicht bis zum Ende abarbeiten kann.

## Patentansprüche

1. Computer-Netzwerk, mit:
- wenigstens einem Zentralrechner, Server, (3), der mit wenigstens zwei Datenverarbeitungs-Endgeräten, Clients, (2) über Netzwerk-Komponenten (4) vernetzt ist;
- wenigstens einem Netzwerk-Management-System zum Feststellen von Netzwerkeigenschaften, insbesondere von Systemfehlern oder -störungen, und zum visuellen Darstellen des momentanen Netzwerkzustandes an einem Endgerät (2);
**dadurch gekennzeichnet, daß**
- das Netzwerk-Management-System mindestens eine Steuereinheit zum Ermitteln der Auswirkungen der festgestellten Netzwerkeigenschaften auf Bereiche einer Unternehmenshierarchie umfaßt, die von den festgestellten Netzwerkeigenschaften unmittelbar oder mittelbar betroffen sind.

2. Computer-Netzwerk nach Anspruch 1, **dadurch gekennzeichnet, daß** die ermittelten Netzwerkeigenschaften den Zustand der Hardwarekomponenten, wie Systemfehler, momentane Auslastung und/oder die freien Systemresourcen, und den Zustand der installierten Softwarekomponenten, wie der momentane Bearbeitungszustand der installierten Applikationen, umfassen.

3. Computer-Netzwerk nach Anspruch 2, **dadurch gekennzeichnet, daß** die Steuereinheit geeignet ist,
- die von etwaigen Einschränkungen der Leistungsfähigkeit oder von Störungen einzelner Netzwerk-teile und/oder der dort installierten Softwarekomponenten betroffenen Bereiche der Unternehmenshierarchie zu ermitteln;
- den Bearbeitungszustand künftiger und/oder der zum Zeitpunkt des Eintritts der Störung noch in Bearbeitung befindlicher Applikationen zu bestimmen; und
- den jeweiligen Netzwerkzustand über eine Ausgabeeinheit visuell darzustellen und mit Rücksicht auf obige Einschränkungen und/oder des Bearbeitungszustandes der Applikationen visuell zu charakterisieren.

4. Computer-Netzwerk nach einem der vorstehenden Ansprüche mit mindestens zwei durch Router (6), Brücken (7) oder Backbones (5) untereinander verbundenen Teilnetzwerken (9), **dadurch gekennzeichnet, daß** jedes der einzelnen Teilnetzwerke (9) über ein eigenes Netzwerk-Management-System verfügt, das für das jeweilige Teilnetzwerk (9) einen Teilnetzwerkzustand bestimmt, diesen mit den Netzwerk-Management-Systemen jedes anderen Teilnetzwerks (9') austauscht und anschließend den Netzwerkzustand für das gesamte Netzwerk (1) bestimmt.

5. Computer-Netzwerk nach Anspruch 4, **dadurch gekennzeichnet, daß** die Netzwerk-Management-Systeme der einzelnen Teilnetzwerke (9, 9') über separate Verbindungsleitungen, insbesondere Telefonleitungen miteinander kommunizieren.

6. Computer-Netzwerk nach einem der Ansprüche 1 bis 5 mit mehreren, ring- oder sternförmig aufgebauten Teilnetzwerken (9) deren Endgeräte (2) direkt oder über einen Sternkoppler (8) mit dem Server (3) verbunden sind, wobei die Server (3) oder die Sternkoppler (8) der einzelnen Teilnetzwerke (9) zu mehreren ringförmigen Netzwerken vorzugsweise mittels Repeater, Brücken (7) oder Backbones (5) zusammengeschaltet sind, **dadurch gekennzeichnet, daß** das Netzwerk-Management-System in Abhängigkeit des ermittelten Netzwerkzustandes, insbesondere etwaiger Einschränkungen der Leistungsfähigkeit des Netzwerkes (1) oder Störungen einer Netzwerkkomponente (4), die Systemadresse des Ziel-Endgerätes (2) derart ändert, daß die überlastete oder blockierte Stelle des Netzwerkes (1) umgangen werden kann.

7. Computer-Netzwerk nach einem der Ansprüche 1 bis 6, **dadurch gekennzeichnet, daß** die Ausgabeeinheit den Netzwerkzustand auf einem dem Systemadministrator zugeordneten Endgerät (2) oder einem am Server (3) angeschlossenen Monitor darstellt.

8. Computer-Netzwerk nach Anspruch 7, **dadurch gekennzeichnet, daß** der Monitor der Arbeitsbildschirm des Endgerätes (2) oder des Servers (3) ist.

9. Computer-Netzwerk nach einem der Ansprüche 1 bis 6, **dadurch gekennzeichnet, daß** die Ausgabeeinheit den Netzwerkzustand auf allen Bildschirmen des Netzwerks (1) oder eines Teilnetzwerkes (9) visuell darstellt.

10. Computer-Netzwerk nach einem der Ansprüche 7 bis 9, **dadurch gekennzeichnet, daß** die visuelle Darstellung des Netzwerkzustandes in Form einer auf dem Bildschirm, insbesondere im Randbereich des Desktops, eingeblendeten Statuszeile erfolgt.

11. Computer-Netzwerk nach einem der vorstehenden Ansprüche, **dadurch gekennzeichnet, daß** die visuelle Darstellung des Netzwerkzustandes in Form einer miniaturisierten Darstellung der Unternehmenshierarchie erfolgt, wobei überlastete, gestörte und störungsfreie Bereiche der Unternehmenshierarchie jeweils farblich voneinander abgesetzt angezeigt sind.

12. Computer-Netzwerk nach Anspruch 11, dadurch geknnzeichnet, daß auf jedem Bildschirm eines Endgerätes (2) oder Servers (3) nur diejenigen Endgeräte (2) sowie dazugehörige Netzwerkkomponenten und die Verbindungen zu angrenzenden Teilnetzwerken dargestellt werden, wobei durch Eingaben, insbesondere durch einen Maus-Klick auf die graphisch angezeigten Verbindungen zu den angrenzenden Teilnetzwerken visuell dargestellte Informationen über die jeweils angrenzenden Teilnetzwerke abrufbar sind.

13. Computer-Netzwerk nach einem der Ansprüche 1 bis 12, **dadurch gekennzeichnet, daß** die visuelle Darstellung des Netzwerkzustandes eine Gewichtung der von der Steuereinheit festgestellten Störungen und Leistungsengpässe nach ihrer betrieblichen Auswirkung umfaßt und daß die Ausgabeeinheit eine Störungsübersicht in der Reihenfolge der Gewichtung auf dem Bildschirm zumindest eines der Benutzer des Netzwerkes (1) ausgibt.

14. Computer-Netzwerk, nach einem der Ansprüche 1 bis 13, **dadurch gekennzeichnet, daß** im Falle einer Störung oder einer Überlastung eines Servers (3), eines Endgerätes (2) oder einer Netzwerkkomponente (4), die an durch die Störung nicht mehr erreichbare Adresse gesandten Daten auf einem geeigneten Speichermedium abgespeichert sind.

15. Computer-Netzwerk nach Anspruch 14, **dadurch gekennzeichnet, daß** das Netzwerk-Management-System die auf dem Speichermedium abgespeicherten Daten nach Beseitigung der Störung oder des Engpasses abruft und selbsttätig an die ursprünglich vorgesehene Zieladresse zur weiteren Bearbeitung sendet.

16. Computer-Netzwerk nach einem der Ansprüche 1 bis 15, **dadurch gekennzeichnet, daß** im Falle einer Störung oder einer Überlastung eines Servers (2), eines Endgerätes (2) und/oder einer Netzwerkkomponente (4) der entsprechende Geschäftsbereich für den Zugriff aus dem übrigen Netzwerk (1) gesperrt ist und dies auf dem Bildschirm wenigstens eines Benutzers, insbesondere des Systemadministrators, visuell dargestellt ist.

17. Verfahren zum Betreiben eines Computer-Netzwerkes mit wenigstens einem Zentralrechner, Server, (3), der mit wenigstens zwei Datenverarbeitungs-Endgeräten (2) über Netzwerk-Komponenten (4) vernetzt ist, wobei
- lokale Netzwerkeigenschaften, insbesondere Systemfehler oder -störungen, mit Hilfe eines Netzwerk-Management-Systems festgestellt und der Netzwerkzustand visuell dargestellt wird,
**dadurch gekennzeichnet, daß**
- die Auswirkungen der festgestellten lokalen Netzwerkeigenschaften auf Bereiche einer Unternehmenshierarchie ermittelt und diese mit Rücksicht darauf visuell dargestellt werden.

18. Verfahren nach Anspruch 17, **dadurch gekennzeichnet, daß** bei Auftreten einer Störung im Netzwerk und/oder einer partiellen Überlastung die aufgetretenen Systemfehler, die Auslastung und/oder die freien Systemresourcen jedes einzelnen Endgerätes (2) sowie der Netzwerkkomponenten (4) ermittelt und das ermittelte Ergebnis mit der betrieblichen Organisationsstruktur abgeglichen wird, um die Auswirkungen einer Leistungsverschlechterung auf die einzelnen betrieblichen Abläufe zu bestimmen, und die Einsatzfähigkeit der einzelnen Bereiche der Unternehmenshierarchie auf zumindest einem Endgerät angezeigt wird.

19. Verfahren nach Anspruch 17 oder 18, **dadurch gekennzeichnet, daß** neben den Ausfällen einzelner Netzwerkbereiche auch deren Einfluß auf die restliche Organisationsstruktur ermittelt wird und auf wenigstens einem der Ausgabegeräte des Netzwerkes die betriebliche Organisationsstruktur vollständig angezeigt wird.

## Claims

1. A computer network with:
- at least one central computer, server, (3), which is networked with at least two data processing terminals, clients, (2) via network components (4);
- at least one network management system for establishing network properties, in particular system errors or faults, and for the visual representation of the instantaneous network status at a terminal (2);
**characterised in that**
- the network management system comprises at least one control unit for determining the effects of the established network properties on regions of a company hierarchy which are directly or indirectly affected by the established network properties.

2. A computer network according to Claim 1,
**characterised in that** the determined network properties comprise the status of the hardware components, such as system errors, instantaneous utilisation of capacity and/or the free system resources, and the status of the installed software components, such as the instantaneous processing status of the installed applications.

3. A computer network according to Claim 2,
**characterised in that** the control unit is suitable for
- determining the regions of the company hierarchy affected by any restrictions in the performance or by faults in individual network parts and/or of the software components installed there;
- determining the process status of future applications and/or applications still being processed at the time of the occurrence of the fault; and
- visually representing the respective network status via an output unit and visually characterising it with regard to above restrictions and/or the processing status of the applications.

4. A computer network according to one of the preceding Claims with at least two sub-networks (9) connected to one another by routers (6), bridges (7) or backbones,
**characterised in that** each of the individual sub-networks (9) has its own network management system, which for the respective sub-network (9) determines a sub-network status, exchanges this with the network management system of each other sub-network (9') and then determines the network status for the entire network (1).

5. A computer network according to Claim 4,
**characterised in that** the network management system of the individual sub-networks (9, 9') communicate with one another via separate junction lines, in particular telephone lines.

6. A computer network according to one of Claims 1 to 5 with several sub-networks (9) with a ring-shaped or star-shaped structure, the terminals (2) of which are connected directly or via a star coupler (8) to the server (3), the servers (3) or the star couplers (8) of the individual sub-networks (9) preferably being interconnected by means of repeaters, bridges (7) or backbones (5) to several ring-shaped networks,
**characterised in that** the network management system, in dependence on the determined network status, in particular any restrictions in the performance of the network (1) or faults in a network component (4), changes the system address of the destination terminal (2) in such a manner that the overloaded or blocked site of the network (1) can be bypassed.

7. A computer network according to one of Claims 1 to 6,
**characterised in that** the output unit represents the network status on a terminal (2) associated with the system administrator or on a monitor connected to the server (3).

8. A computer network according to Claim 7,
**characterised in that** the monitor is the working display of the terminal (2) or of the server (3).

9. A computer network according to one of Claims 1 to 6,
**characterised in that** the output unit visually displays the network status on all displays of the network (1) or of a sub-network (9).

10. A computer network according to one of Claims 7 to 9,
**characterised in that** the visual representation of the network status occurs in the form of a status line superimposed on the display screen, in particular in the edge region of the desktop.

11. A computer network according to one of the preceding Claims,
**characterised in that** the visual representation of the network status takes place in the form of a miniaturised representation of the company hierarchy, with overloaded, faulty and fault-free regions of the company hierarchy each being displayed separated by colour from one another.

12. A computer network according to Claim 11,
**characterised in that** on each display screen of a terminal (2) or server (3) only those terminals (2) and associated network components and the connections to adjacent sub-networks are represented, wherein visually represented information regarding the respective adjacent sub-networks can be fetched by inputs, in particular by a mouse click on the graphically displayed links to the adjacent sub-networks.

13. A computer network according to one of Claims 1 to 12,
**characterised in that** the visual representation of the network status comprises a weighting of the faults and power bottlenecks detected by the control unit according to their operational effect **and in that** the output unit outputs a fault summary in the sequence of the weighting on the display screen of at least one of the users of the network (1).

14. A computer network according to one of Claims 1 to 13,
**characterised in that** in the event of a fault or of an overloading of a server (3), a terminal (2) or a network component (4), the data sent to an address which can no longer reached as a result of the fault are stored on a suitable data carrier.

15. A computer network according to Claim 14,
**characterised in that** the network management system fetches the data stored on the data carrier after the removal of the fault or the bottle neck and automatically sends it to the originally intended destination address for further processing.

16. A computer network according to one of Claims 1 to 15,
**characterised in that** in the event of a fault or an overload of a server (2), a terminal (3) and/or a network component (4) the corresponding corporate division is blocked for access from the remaining network (1) and this is visually represented on the screen of at least one user, in particular the system administrator.

17. A method for operating a computer network with at least one central computer, server, (3), which is networked with at least two data processing terminals (2) via network components (4), whereby
- local network properties, in particular system errors or faults, [are] established by means of a network management system and the network status is visually represented,
**characterised in that**
- the effects of the established local network properties on areas of a company hierarchy are determined and these are visually represented with consideration thereto.

18. A method according to Claim 17,
**characterised in that,** upon the occurrence of a fault in the network and/or a partial overload, the system errors that occurred, the utilisation of capacity and/or the free system resources of each individual terminal (2) and also of the network components is determined and the determined result is aligned with the operational organisational structure in order to determine the effects of a deterioration in performance on the individual sequences of operations, and the serviceability of the individual regions of the company hierarchy is displayed on at least one terminal.

19. A method according to Claim 17 or 18,
**characterised in that** apart from the failures of individual network regions, their influence on the remaining organisational structure is also determined and the operational organisational structure is fully displayed on at least one of the output units of the network.

## Revendications

1. Réseau informatique comprenant au moins un ordinateur central serveur (3), qui est relié en réseau avec au moins deux terminaux de traitement de données clients (2) par l'intermédiaire de composants de réseau (4) ; au moins un système de gestion de réseau destiné à détecter les propriétés du réseau, en particulier les erreurs du système ou les pannes du système, et destiné à représenter visuellement l'état actuel du réseau sur un terminal (2) ; **caractérisé en ce que** le système de gestion du réseau comprend au moins une unité de commande destinée à déterminer les incidences des propriétés du réseau, qui ont été détectées, sur les différents domaines de la hiérarchie d'une entreprise, lesquels sont concernés directement ou indirectement par les propriétés du réseau détectées.

2. Réseau informatique selon la revendication 1, **caractérisé en ce que** les propriétés du réseau détectées englobent l'état des composants matériels, telles que des erreurs du système, une surcharge actuelle et/ou des ressources système libres, et l'état des composants logiciels installés, tel que l'état actuel de traitement des applications installées.

3. Réseau informatique selon la revendication 2, **caractérisé en ce que** l'unité de commande est conçue pour déterminer les domaines de la hiérarchie de l'entreprise qui sont concernés par d'éventuelles limitations de capacité ou par des pannes dans les différentes parties du réseau et/ou dans les composants logiciels qui y sont installés ; pour déterminer l'état de traitement des futures applications et/ou des applications qui sont encore en traitement au moment de l'apparition de la panne ; et pour représenter visuellement l'état correspondant du réseau sur une unité d'édition et pour le caractériser visuellement en faisant apparaître les limitations ci-dessus et/ou l'état de traitement des applications.

4. Réseau informatique selon l'une quelconque des revendications précédentes comprenant au moins deux réseaux secondaires (9) reliés entre eux par l'intermédiaire de routeurs (6), de ponts (7) ou de dorsales (8), **caractérisé en ce que** chacun des réseaux secondaires (9) dispose de son propre système de gestion de réseau, qui détermine l'état du réseau secondaire (9) concerné, intervertit celui-ci avec les systèmes de gestion de réseau de chaque autre réseau secondaire (9') et détermine ensuite l'état de l'ensemble du réseau (1).

5. Réseau informatique selon la revendication 4, **caractérisé en ce que** les systèmes de gestion de réseau de chaque réseau secondaire (9, 9') communiquent entre eux par des lignes de communication séparées, en particulier des lignes téléphoniques.

6. Réseau informatique selon l'une quelconque des revendications 1 à 5 comprenant plusieurs réseaux secondaires (9) montés en anneau ou en étoile, dont les terminaux (2) sont reliés au serveur (3) directement ou par l'intermédiaire d'un coupleur en étoile (8), les serveurs (3) ou les coupleurs en étoile (8) de chaque réseau secondaire (9) étant connectés entre eux pour former plusieurs réseaux en anneau, de préférence par l'intermédiaire de répéteurs, de ponts (7) ou de dorsales (5), **caractérisé en ce que** le système de gestion de réseau modifie les adresses système du terminal cible (2) en fonction de l'état du réseau détecté, en particulier des éventuelles limitations de capacité du réseau (1) ou des pannes sur un composant du réseau (4), de telle sorte qu'il est possible de contourner la zone surchargée ou bloquée du réseau (1).

7. Réseau informatique selon l'une quelconque des revendications 1 à 6, **caractérisé en ce que** l'unité d'édition représente visuellement l'état du réseau sur un terminal (2) associé à l'administrateur du système ou sur un moniteur connecté au serveur (3).

8. Réseau informatique selon la revendication 7, **caractérisé en ce que** le moniteur constitue l'écran de travail du terminal (2) ou du serveur (3).

9. Réseau informatique selon l'une quelconque des revendications 1 à 6, **caractérisé en ce que** l'unité d'édition représente visuellement l'état du réseau sur tous les écrans du réseau (1) ou d'un réseau secondaire (9).

10. Réseau informatique selon l'une quelconque des revendications 7 à 9, **caractérisé en ce que** l'état du réseau est représenté visuellement sous forme d'une ligne d'état affichée sur l'écran, en particulier dans une zone de bordure de l'ordinateur de bureau.

11. Réseau informatique selon l'une quelconque des revendications précédentes, **caractérisé en ce que** l'état du réseau est représenté visuellement sous forme d'une représentation miniaturisée de la hiérarchie de l'entreprise, les domaines surchargés, les domaines en panne et les domaines non perturbés se distinguant les uns des autres par différentes couleurs.

12. Réseau informatique selon la revendication 11, **caractérisé en ce que** sur chaque écran d'un terminal (2) ou des serveurs (3) sont seulement représentés les terminaux (2), ainsi que les composants de réseau attenants et les liaisons vers les réseaux secondaires limitrophes, sachant que des entrées, en particulier un clic de la souris sur les liaisons, schématiquement représentées, avec les réseaux secondaires limitrophes, permettent de faire afficher des informations relatives à chacun des réseaux secondaires limitrophes.

13. Réseau informatique selon l'une quelconque des revendications 1 à 12, **caractérisé en ce que** la représentation visuelle de l'état du réseau comprend une pondération des pannes et des goulets d'étranglement, détectés par l'unité de commande en fonction de leur incidence opérationnelle et **en ce que** l'unité d'édition affiche sur l'écran d'au moins un des utilisateurs du réseau (1) une liste des pannes dans l'ordre de la pondération.

14. Réseau informatique selon l'une quelconque des revendications 1 à 13, **caractérisé en ce que**, dans le cas d'une panne ou d'une surcharge d'un serveur (3), d'un terminal (2) ou d'un composant de réseau (4), les données envoyées à des adresses qui ne peuvent plus être contactées en raison de la panne sont stockées sur un support mémoire approprié.

15. Réseau informatique selon la revendication 14, **caractérisé en ce que**, à la fin de la panne ou du goulet d'étranglement, le système de gestion de réseau appelle les données stockées sur le support mémoire et les envoie automatiquement vers l'adresse cible prévue initialement aux fins de traitement.

16. Réseau informatique selon l'une quelconque des revendications 1 à 15, **caractérisé en ce que**, dans le cas d'une panne ou d'une surcharge d'un serveur (3), d'un terminal (2) ou d'un composant du réseau (4), le domaine de l'entreprise concerné est verrouillé pour empêcher tout accès provenant du reste du réseau (1) et cette situation est représentée visuellement sur l'écran d'au moins un utilisateur, en particulier l'administrateur du système.

17. Procédé destiné à l'exploitation d'un réseau informatique comprenant au moins un ordinateur central serveur (3), qui est relié en réseau avec au moins deux terminaux de traitement de données clients (2) par l'intermédiaire de composants de réseau (4), dans lequel procédé des propriétés locales du réseau, en particulier les erreurs du système ou les pannes du système, sont détectées au moyen d'un système de gestion de réseau et l'état du réseau est représenté visuellement, **caractérisé en ce qu'**il est prévu de déterminer les incidences des propriétés locales du réseau, qui ont été détectées, sur des domaines de la hiérarchie d'une entreprise et de représenter visuellement ladite hiérarchie en faisant apparaître ces incidences.

18. Procédé selon la revendication 17, **caractérisé en ce que**, en cas d'apparition d'une panne dans le réseau et/ou d'une surcharge partielle, il est prévu de déterminer les erreurs du système générées, la surcharge et/ou les ressources système libres de chaque terminal (2), ainsi que des composants de réseau (4) et le résultat obtenu est ajusté avec la structure d'organisation opérationnelle, afin de déterminer les incidences d'une baisse de capacité sur les différentes procédures opérationnelles, et d'afficher sur au moins un terminal la capacité d'utilisation de chaque domaine de la hiérarchie de l'entreprise.

19. Procédé selon la revendication 17 ou 18, **caractérisé en ce qu'**il est prévu de déterminer non seulement les pannes dans les différents domaines du réseau, mais aussi leur influence sur le reste de la structure d'organisation, et d'afficher sur au moins une des unités d'édition du réseau l'intégralité de la structure d'organisation opérationnelle.
